# EUROPEAN PATENT APPLICATION

(11) **EP 2 164 288 A2**
(43) Date of publication of application: **17.03.2010**
(21) Application number: 09252045.1
(22) Date of filing: 24.08.2009
(51) Int. Cl.: H04W 36/06

(54) **System and method for system switch and handover between wireless communication systems**

(30) Priority: 12.09.2008 US 96754 P; 13.08.2009 US 540645
(71) Applicant: Industrial Technology Research Institute, Hsinchu 31040 (TW)
(72) Inventor: Chen, Yung-Han, Hsinchu 31040 (TW); Ren, Fang-Ching, Hsinchu 31040 (TW); Li, Chi-Fang, Hsinchu 31040 (TW)
(74) Representative: Roberts, Mark Peter

(57) **Abstract**

A method of a base station for wireless communication includes providing a first zone and a second zone for wireless communication; operating the first zone using a first operation mode; and operating the second zone using a second operation mode. The method also includes communicating with a mobile station in the first zone using the first operation mode; determining whether the mobile station is capable of operating using both the first operation mode and the second operation mode; and performing, if the mobile station is determined to be capable of operating using both the first and second operating modes, a zone switch procedure to switch the mobile station from the first zone using the first operation mode to the second zone using the second operation mode.

## Description

### Cross Reference to Related Applications

This application is based upon and claims the benefit of priority from U.S. Provisional Application No. 61/096,754 to Yung-Han Chen et al. filed on September 12, 2008, the entire contents of which are incorporated herein by reference.

### Technical Field

The present disclosure relates generally to wireless communication systems and, more particularly, to techniques for switching between wireless communication systems.

### Background

A mobile wireless communication network, such as a cellular network, is often divided into a plurality of geographically separated, but normally overlapping cells. Each cell is controlled by a base station (BS) for communicating with mobile stations (MS) within the cell. When an MS moves from one cell to another cell and the MS is transferred from one BS to another BS, a handover process is performed by the BSs and the MS. Because the BSs may be controlled by different network operators, these BSs may use different communication formats, such as time division multiple access (TDMA), frequency division multiple access (FDMA), or code division multiple access (CDMA), The MSs may be transferred by using different procedures, such as where the handover is initiated by an MS or a BS.

Various techniques have been developed to perform the handover process. For example, U.S. Patent No. 6,115,608 issued to Duran et al. on September 5, 2000 (the '608 patent), describes an intersystem handover method and apparatus. In the '608 patent, an MS is aware of all the IDs of all the BSs of a different communication system with which it is to interact and, thus, internally initiates handoff requests. The MS monitors signals of formats of the BSs involved for maintaining a table of received signals from nearby cells, the cell IDs and signal quality, while maintaining an active call and further transmits a handover request in a command channel while in an active call mode. As another example, U.S. Patent No. 7,010,300 issued to Jones et al. on March 7, 2006 (the '300 patent) describes a method and system for intersystem wireless communications session hand-off. In the '300 patent, an MS uses one protocol to communicate with one access system and uses a second protocol that encapsulates the first protocol to communicate with a second access system. After the MS registers with the second access system, the ongoing communication session is handed over to the second access system according to the second protocol over the first protocol (hand-off/switch indication) between the MS and the first access system.

However, these conventional techniques do not address situations in which newly developed advanced BSs co-exist with legacy BSs. It may be desirable for the advanced BSs and MSs to achieve backward compatibility to support the legacy BSs. Further, if the advanced BSs and MSs support a legacy operation mode in addition to an advanced operation mode to provide the legacy support, a system switch procedure may be needed to transfer an active communication session or access link between an advanced BS and an advanced MS from the legacy operation mode to the advanced operation mode.

Methods and systems consistent with certain features of the disclosed embodiments address one or more of the problems set forth above.

### SUMMARY

An example in accordance with the present disclosure includes a method of a base station for wireless communication. The method includes providing a first zone and a second zone for wireless communication; operating the first zone using a first operation mode; and operating the second zone using a second operation mode. The method also includes communicating with a mobile station in the first zone using the first operation mode; and determining whether the mobile station is capable of operating using both the first operation mode and the second operation mode. Further, the method includes performing a zone switch procedure to switch the mobile station from the first zone using the first operation mode to the second zone using the second operation mode, if the mobile station is determined to be capable of operating using both the first and second operating modes.

Optionally, the first operation mode is one of a legacy operation mode and an advanced operation mode; and the second operation mode is the other one of the legacy operation mode and the advanced operation mode.

Optionally, performing the zone switch procedure includes: performing the zone switch procedure using a make-before-break method.

Optionally, performing the zone switch procedure includes: performing the zone switch procedure using a break-before-make method.

Another example in accordance with the present disclosure includes a method of a mobile station capable of communicating in a first operation mode and a second operation mode. The method includes operating in the first operation mode for communicating with a first zone of a base station, and establishing a communication link with the base station using the first operation mode. The method also includes determining that the base station is capable of operating in both the first operation mode and the second operation mode. Further, the method includes performing a zone switch procedure to switch the mobile station from the first zone using the first operation mode to a second zone using the second operation mode and operating in the second operation mode for communicating with the second zone of the base station.

Optionally, the first operation mode is one of a legacy operation mode and an advanced operation mode; and the second operation mode is the other one of the legacy operation mode and the advanced operation mode.

Optionally, the mobile station determines that the base station is capable of operating in both the first operation mode and the second operation mode based on a zone indicator from the base station.

Optionally, performing the zone switch procedure includes: performing the zone switch procedure using a make-before-break method.

Optionally, performing the zone switch procedure includes: performing the zone switch procedure using a break-before-make method.

Another example in accordance with the present disclosure includes a method of a communication network for wireless communication. The method includes providing a first base station capable of operating in a first operation mode; providing a second base station capable of providing one or more zones and operating in at least a second operation mode; and providing at least one mobile station capable of operating in the first operation mode and the second operation mode. The method also includes communicating, by the mobile station, with one of the first base station and the second base station, and performing a handover procedure to hand over the mobile station between the first base station and the second base station.

Optionally, the first operation mode is a legacy operation mode; and the second operation mode is an Advanced operation mode.

Optionally, the one or more zones include a first zone operating in the first operation mode and a second zone operating in the second operation mode and performing the handover procedure includes: obtaining, by the mobile station, information about the first zone of the second base station from the first base station; performing the handover procedure from the first base station to the first zone of the second base station; obtaining, by the mobile station, information about the second zone of the second base station from the first zone of the second base station; and performing a zone switch from the first zone of the second base station to the second zone of the second base station.

Optionally, performing the handover procedure includes: obtaining, by the mobile station, information about a selected zone of the one or more zones of the second base station, the selected zone operating in the second operation mode, from the first base station; and performing the handover procedure from the first base station to the zone of the second base station.

Optionally, the one or more zones include a first zone operating in the first operation mode and a second zone operating in the second operation mode and performing the handover procedure includes: obtaining, by the mobile station, information about the first zone of the second base station from the first base station; starting the handover procedure from the first base station to the first zone of the second base station; receiving, by the mobile station, information about the second zone of the second base station from the first zone of the second base station before the handover procedure is completed; and completing the handover procedure to hand over the mobile station from the first base station to the second zone of the second base station.

Optionally, performing the handover procedure includes: obtaining, by the mobile station, information about the first base station from the second base station; and performing the handover procedure from a selected zone of the one or more zones of the second base station to the first base station, the selected zone operating in the second operation mode.

Optionally, the one or more zones include a first zone operating in the first operation mode and a second zone operating in the second operation mode and wherein performing the handover procedure includes: obtaining, by the mobile station, information about the first base station from the second base station; performing the handover procedure from the second zone of the second base station to the first base station; before performing the handover procedure, performing a zone switch from the second zone of the second base station to the first zone of the second base station.

Another example in accordance with the present disclosure includes a base station for wireless communication. The base station includes one or more antennas and a transceiver coupled to the one or more antennas for receiving and transmitting communication data from and to mobile stations. The base station also includes a processor. The processor is configured to provide a first zone and a second zone for wireless communication; to operate the first zone using a first operation mode; and to operate the second zone using a second operation mode. The processor is also configured to communicate with a mobile station in the first zone using the first operation mode; and to determine whether the mobile station is capable of operating using both the first operation mode and the second operation mode. Further, the processor is configured to perform a zone switch procedure to switch the mobile station from the first zone using the first operation mode to the second zone using the second operation mode, if the mobile station is determined to be capable of operating using both the first operation mode and the second operation mode.

Optionally, the first operation mode is one of a legacy operation mode and an advanced operation mode; and the second operation mode is the other one of the legacy operation mode and the advanced operation mode.

Optionally, the processor is configured to perform the zone switch procedure using a make-before-break method.

Optionally, the processor is configured to perform the zone switch procedure using a break-before-make method.

Another example in accordance with the present disclosure includes a mobile station capable of communicating in a first operation mode and a second operation mode. The mobile station includes one or more antennas and a transceiver coupled to the one or more antennas for receiving and transmitting communication data from and to base stations. The mobile station also includes a processor. The processor is configured to operate the first operation mode for communicating with a first zone of a base station; and to establish a communication link with the base station using the first operation mode. The processor is also configured to determine whether the base station is capable of operating in both the first operation mode and the second operation mode, and to perform a zone switch procedure to switch the mobile station from the first zone using the first operation mode to the second zone using the second operation mode, if the base station is determined to be capable of operating using both the first and second operation modes. Further, the processor is configured to operate the second operation mode for communicating with the second zone of the base station.

Optionally, the first operation mode is one of a legacy operation mode and an advanced operation mode; and the second operation mode is the other one of the legacy operation mode and the advanced operation mode.

Optionally, the processor is configured to determine whether the base station is capable of operating in both the first operation mode and the second operation mode based on a zone indicator from the base station.

Optionally, the processor is configured to perform the zone switch procedure using a make-before-break method.

Optionally, the processor is configured to perform the zone switch procedure using a break-before-make method.

Another example in accordance with the present disclosure includes a mobile station for wireless communication. The mobile station includes one or more antennas and a transceiver coupled to the one or more antennas for receiving and transmitting communication data from and to base stations. The mobile station also includes a processor. The processor is configured to provide a first operation mode for communicating with a first base station capable of operating in the first operation mode, and to provide a second operation mode for communicating with a second base station capable of operating in the first operation mode in a first zone and operating in the second operation mode in a second zone. The processor is also configured to communicate with one of the first base station and the second base station, and to perform a handover procedure to hand over between the first base station and the second base station.

Optionally, the first operation mode is a legacy operation mode; and the second operation mode is an advanced operation mode.

Optionally, to perform the handover procedure, the processor is configured to: obtain information about the first zone of the second base station from the first base station; perform the handover procedure from the first base station to the first zone of the second base station; obtain information about the second zone of the second base station from the first zone of the second base station; and perform a zone switch from the first zone of the second base station to the second zone of the second base station.

Optionally, to perform the handover procedure, the processor is configured to: obtain information about the second zone of the second base station from the first base station; and perform the handover procedure from the first base station to the second zone of the second base station.

Optionally, to perform the handover procedure, the processor is configured to: obtain information about the first zone of the second base station from the first base station; start the handover procedure from the first base station to the first zone of the second base station; receive information about the second zone of the second base station from the first zone of the second base station before the handover procedure is completed; and complete the handover procedure to hand over the mobile station from the first base station to the second zone of the second base station.

Optionally, to perform the handover procedure, the processor is configured to: obtain information about the first base station from the second base station; and perform the handover procedure from the second zone of the second base station to the first base station.

Optionally, to perform the handover procedure, the processor is further configured to: perform a zone switch from the second zone of the second base station to the first zone of the second base station.

It is to be understood that both the foregoing general description and the following detailed description are exemplary and explanatory only and are not restrictive of the invention, as claimed.

### BRIEF DESCRIPTION OF THE DRAWINGS

Figure 1 shows an exemplary communication environment incorporating features consistent with disclosed embodiments;

Figure 2 shows an exemplary BS in communication with an MS consistent with disclosed embodiments;

Figure 3 shows an exemplary controller consistent with disclosed embodiments;

Figure 4 illustrates an exemplary MS initiated zone switch process consistent with disclosed embodiments;

Figure 5 illustrates another exemplary MS initiated zone switch process consistent with disclosed embodiments;

Figure 6 illustrates an exemplary BS initiated zone switch process consistent with disclosed embodiments;

Figure 7 illustrates another exemplary BS initiated zone switch process consistent with disclosed embodiments;

Figure 8 illustrates an exemplary one-stage handover procedure from a serving legacy BS to a target advanced BS consistent with disclosed embodiments;

Figure 9 illustrates an exemplary one-stage handover procedure from a serving advanced BS to a target legacy BS consistent with disclosed embodiments;

Figure 10A illustrates a high-level exemplary two-stage handover procedure from a serving legacy BS to a target advanced BS consistent with disclosed embodiments;

Figure 10B illustrates a high-level exemplary two-stage handover procedure from a serving advanced BS to a target legacy BS consistent with disclosed embodiments;

Figure 11 illustrates an exemplary two-stage handover procedure in detail from a serving legacy BS to a target advanced BS consistent with disclosed embodiments;

Figure 12 illustrates an exemplary two-stage handover procedure in detail from a serving legacy BS to a target advanced BS consistent with disclosed embodiments; and

Figure 13 illustrates an exemplary process performed by an MS for target network entry consistent with disclosed embodiments.

### DETAILED DESCRIPTION

Reference will now be made in detail to embodiments of the invention, examples of which are illustrated in the accompanying drawings. Wherever possible, the same reference numbers will be used throughout the drawings to refer to the same or like parts.

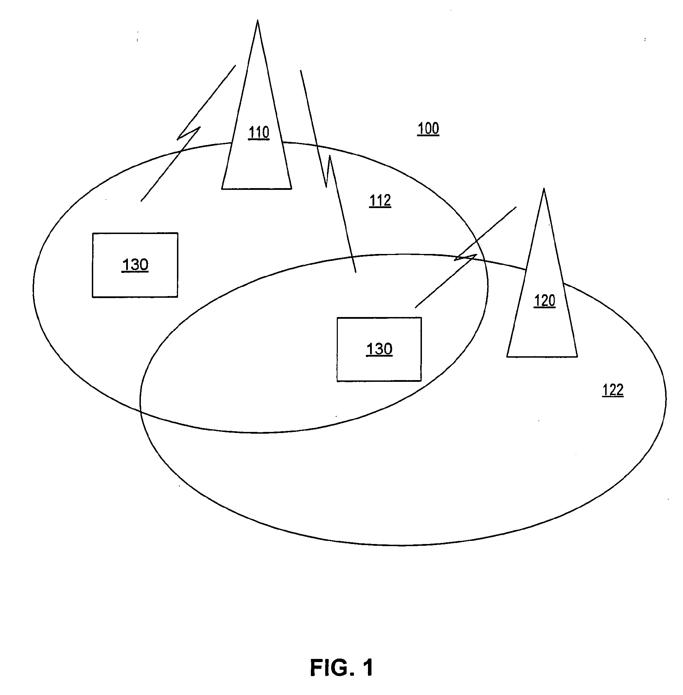

Fig. 1 shows an exemplary communication environment 100 incorporating features consistent with embodiments of the present invention. As shown in Fig. 1, communication environment 100, such as a wireless communication network using various systems, e.g., code division multiple access (CDMA), wideband code division multiple access (WCDMA), wireless local area network (WLAN), worldwide interoperability for microwave access (WiMAX), and OFDM, may include a base station (BS) 110, a BS 120, and a mobile station (MS) 130. The number of BSs and MSs is exemplary only and not intended to be limiting. Any number of BSs and MSs may be used, and other devices may be added. BS 110 may control a cell 112, and BS 120 may control a cell 122. MS 130 may move between locations controlled by different BSs. For example, as shown in Fig. 1, MS 130 may move from one location controlled by BS 110 to another location controlled by BS 120, and overlapped with BS 110.

Further, BS 110 may be an advanced BS and BS 120 may be a legacy BS. Other types of systems, however, may also be used. A legacy BS, as used herein, may refer to a base station that operates in a legacy operation mode according to legacy specifications. A legacy specification is used relative to an advance specification. A legacy specification may refer to a specification of a standard, such as IEEE 802.16, that is still in use but is outdated by another specification of the standard, usually providing improvement on speed, bandwidth, and/or efficiency (i.e., an advanced specification). An advanced BS, as used herein, may refer to a base station that operates in an advanced operation mode according to one or more advanced specifications. The advanced BS may also support the legacy operation mode in order to be backward compatible with the legacy BS.

For example, a BS according to IEEE 802.16e standards, which has been included in IEEE 802.16Rev2, may be considered as a legacy BS; while a BS according to IEEE 802.16m standards may be considered as an advanced BS, which may provide backward compatibility with the IEEE 802.16e standards. Other standards, however, may also apply.

Advanced BS 110 may include two or more different zones, e.g., a legacy zone and an advanced zone. A zone, as used herein, may refer to a set of systems, hardware resources, and/or software resources configured by a BS to support a particular operation mode within a cell. For example, a zone may include a block or segment of time and/or frequency resources for the particular operation mode. A legacy zone thus may mean a time duration and/or a frequency band that is dedicated for legacy communications and operations and an advanced zone may mean a time duration and/or a frequency band that is dedicated for advanced communications and operations. Further, a zone may also include a certain coverage area within the cell. Any appropriate time/space/frequency resources may be included in a zone.

In operation, BS 110 may reserve resources for access with the legacy operation mode for the legacy zone, and may also reserve resources for access with the advanced operation mode for the advanced zone. The coverage of the legacy zone and the advanced zone may cover different areas within cell 112; may overlap certain areas within cell 112; or may coincide with each other. The resources may include any appropriate hardware and/or software resources used in wireless communication, such as memory, processor, backend server, network operation equipment, databases, transmission opportunities, etc.

MS 130 may also operate in both an advanced operation mode and a legacy operation mode. Thus, MS 130 may choose a particular operation mode to access BS 110. For example, MS 130 may use the legacy operation mode to access a legacy zone of BS 110; or may use the advance operation mode to access an advanced zone of BS 110. Further, MS 130 may switch the access between the legacy zone and the advanced zone by using zone switch procedures or system switch procedures.

A zone that currently serves MS 130 or provides an active access link may be referred to as a serving zone, and a zone that MS 130 switches to may be referred to as a target zone. Thus, the legacy zone and the advanced zone of BS 110 may be either the serving zone or the target zone, and the zone switch may be from the legacy zone to the advanced zone or from the advanced zone to the legacy zone. Further, the zone switch procedures may be initiated by either MS 130 or BS 110.

During the zone switch, MS 130 may perform a target zone entry procedure to establish an access link with a target zone. If MS 130 terminates the access link with a serving zone before performing the target zone entry procedure, it is called a break-before-make zone switch because MS 130 breaks the original access link before making the target zone entry. A break-before-make zone switch may also be called a break-before-entry zone switch.

On the other hand, if MS 130 terminates the access link with the serving zone after performing the target zone entry procedure, it is called a make-before-break zone switch because MS 130 makes the target zone entry before it breaks the original link. A make-before-break zone switch may also be called an entry-before-break zone switch.

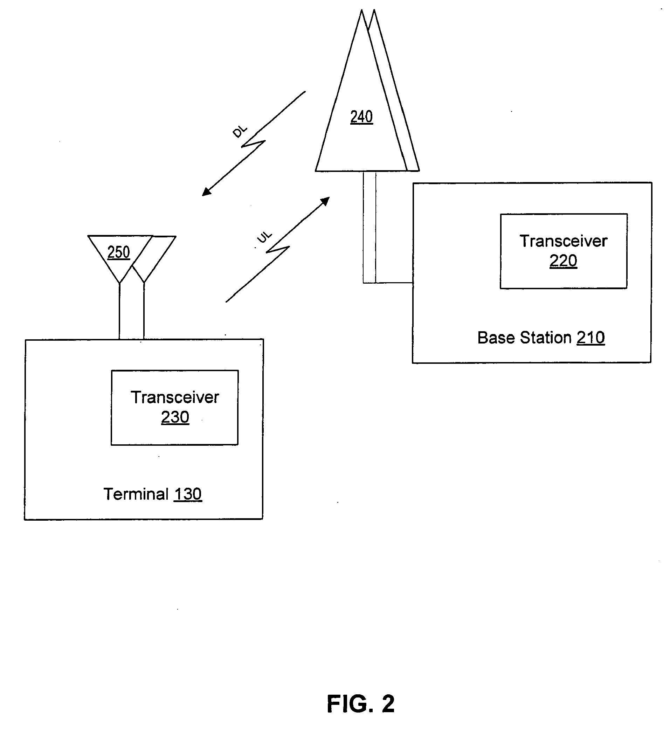

Again with reference to Fig. 1, BS 110 and BS 120 may include any appropriate type of wireless or radio base station, such as a land-based communication base station or a satellite-based communication base station, according to certain standards, such as IEEE 802.16e, IEEE 802.16m, or other standards. Fig. 2 shows an exemplary BS 210 representing BS 110 or BS 120 in communication with MS 130.

As shown in Fig. 2, BS 210 may include any appropriate type of voice, data, and/or integrated voice and data communication equipment to provide high speed data and/or voice communications. For example, BS 210 may include a transceiver 220 and one or more antennas 240. Transceiver 220 may include any appropriate type of transmitter and receiver to transmit data from BS 210 to other wireless devices and to receive data from the other wireless devices. Transceiver 220 may include any desired functional component(s), processor(s), and/or circuitries to provide coding/encoding, modulation/demodulation, pilot symbol insertion/removal, and other wireless channel related functions. Further, transceiver 220 may use one or more antennas 240 for transmitting and receiving in different configurations, such as single-input and single-output (SISO), single-input and multiple-output (SIMO), multiple-input and single-output (MISO), and multiple-input and multiple-output (MIMO).

MS 130 may include any appropriate communication terminal capable of communicating with BS 210 based on any of the various communication standards, such as IEEE 802.16 standards (e.g., IEEE 802.16e, IEEE 802.16m), IEEE 802.11 standards, CDMA, WCDMA, GSM, etc. MS may include terminal devices such as a mobile phone, a hand-held device, or any type of wireless device. MS 130 may also be configured to communicate with other communication terminals (not shown) directly or indirectly via BS 210, such as a landline communication device or a wireless communication device. Further, MS 130 may include a wireless communication transceiver 230 for carrying out the communication between MS 130 and BS 210 and/or between MS 130 and the other communication terminals.

Transceiver 230 may include any appropriate type of mobile device communication transceiver, i.e., a combination of a transmitter and a receiver having a common frequency control. Transceiver 230 may include various circuitries provided for processing signals generated during the transmitting and/or receiving operations of transceiver 230.

Further, MS 130 may include one or more antennas 250 used by transceiver 230 to receive and transmit signals from and to BS 210. MS 130 may also be configured to operate in SISO, SIMO, MISO, and/or MIMO mode. MS 130 receives signals or data from BS 210 through a downlink (DL) channel established between MS 130 and BS 210 and transmits signals or data to BS 210 through an uplink (UL) channel established between MS 130 and BS 210.

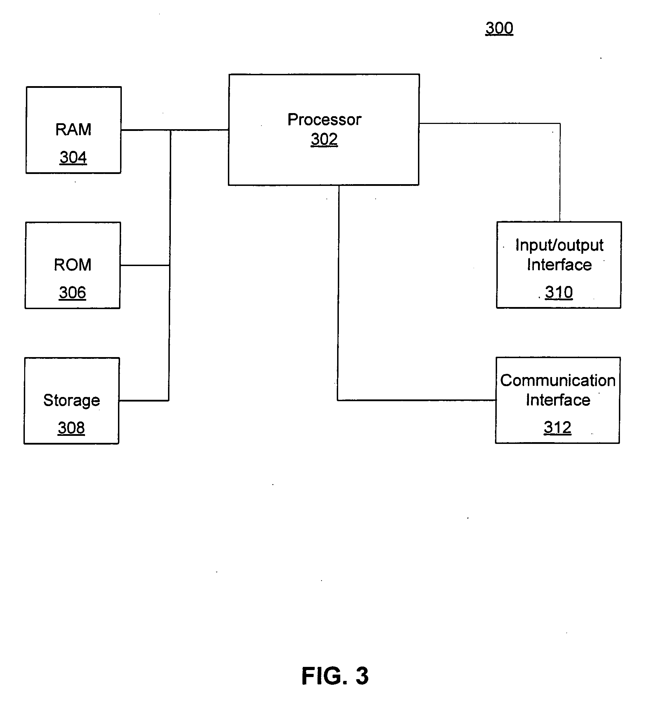

Operations of MS 130 and/or BS 210 may be controlled by a controller (not shown in Fig. 2). Fig. 3 shows an exemplary controller 300 that may be implemented in MS 130 and/or BS 210. As shown in Fig. 3, controller 300 may include a processor 302, a random access memory (RAM) 304, a read-only memory (ROM) 306, a storage 308, an input/output interface 310, and a communication interface 312. It is understood that the type and number of devices included in controller 300 are exemplary only and not intended to be limiting. The number of listed devices may be changed, certain devices may be removed, and other devices may be added.

Processor 302 may include any appropriate type of general purpose microprocessor, digital signal processor, application specific integrated circuit (ASIC), and/or microcontroller. Processor 302 may execute sequences of computer program instructions to perform various information processing functions and control functions. Processor 302 may be coupled to or access other devices, such as transceivers, other processors, radio frequency (RF) devices, and/or antennas.

RAM 304 and ROM 306 may include any appropriate type of random access memory, read only memory, or flash memory. Storage 308 may include any appropriate type of mass storage provided to store any type of information that processor 302 may need to perform processing/functions. For example, storage 308 may include one or more hard disk devices, optical disk devices, floppy disk devices, and/or other storage devices to provide storage space.

Input/output interface 310 may send control and data signals to other devices from processor 302 and may receive control and data signals sent from other devices to processor 302. Communication interface 312 may provide communication connections to enable controller 300 to exchange information with other systems via, for example, computer networks, such as the Internet.

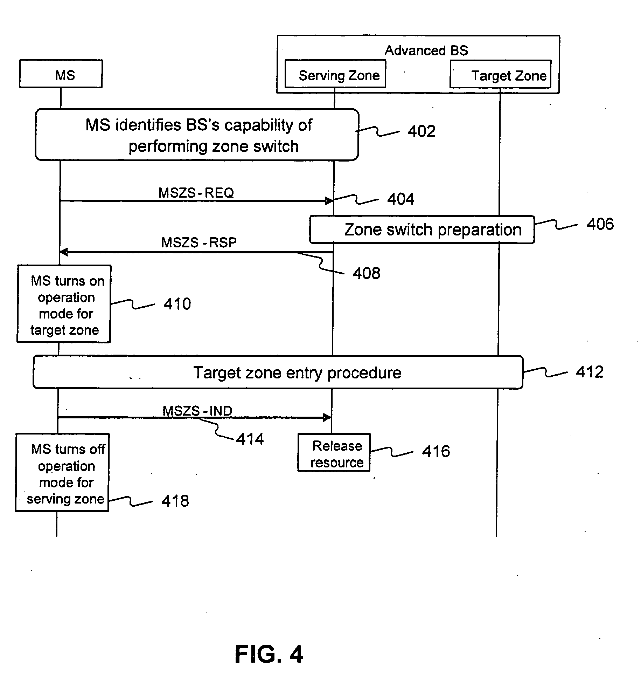

As explained previously, a zone switch may be performed between MS 130 and BS 110, and the zone switch may be initiated by either MS 130 or BS 110. Fig. 4 illustrates an exemplary MS initiated zone switch process. Unless otherwise stated, all steps in the processes disclosed in this application are performed by BS 110, BS 120, and/or MS 130 and, more particularly, by processor 302 of BS 110, BS 120, and/or MS 130.

As shown in Fig. 4, the zone switch may be initiated by MS 130 via a make-before-break zone switch procedure with BS 110, which is an advanced BS. At the beginning, MS 130 identifies BS 110's capability of performing zone switch (402). BS 110 is capable of performing zone switch if BS 110 can activate both a legacy zone and an advanced zone for communication with MS 130. There may be several ways for BS 110 to announce the capability of performing zone switch to MS 130. For example, BS 110 may announce the capability using a type of indication message, e.g., alternative zone indication (ALT_ZON-IND) message to MS 130, or BS 110 may announce the capability using an alternative zone indicator carried by other types of messages to MS 130.

The alternative zone indicator may be a flag, a bit, or several bits in the messages. For example, a reserved bit in the frame control header (FCH) of IEEE 802.16 systems may be used to represent the alternative zone indicator, as shown in Table 1 below.

**Table 1. Alternative zone indicator by FCH modification**

| **Syntax** | **Size (bit)** | **Notes** |
|---|---|---|
| DL_Frarne_Prefix_Format() { | | |
| Used subchannel bitmap | 6 | Bit #0: Subchannel group 0 |
| | | Bit #1: Subchannel group 1 |
| | | Bit #2: Subchannel group 2 |
| | | Bit #3: Subchannel group 3 |
| | | Bit #4: Subchannel group 4 |
| | | Bit #5: Subchannel group 5 |
| **Alternative Zone Indicator** | **1** | **0: Do not support 16m access** |
| | | **1: Support 16m access** |
| Repetition_Coding_Indication | 2 | 0b00: No repetition coding on DL-MAP |
| | | Ob01: Repetition coding of 2 used on DL-MAP |
| | | 0b10: Repetition coding of 4 used on DL-MAP |
| | | 0b11: Repetition coding of 6 used on DL-MAP |
| Coding_Indication | 3 | 0b000: CC encoding used on DL-MAP |
| | | 0b001: BTC encoding used on DL-MAP |
| | | 0b010: CTC encoding used on DL-MAP |
| | | 0b011: ZT CC encoding used on DL-MAP |
| | | 0b100: CC encoding with optional interleaver |
| | | 0b101: LDPC encoding used on DL-MAP |
| | | 0b110 to 0b111: *Reserved* |
| DL-Map_Length | 8 | |
| *Reserved* | 4 | Shall be set to zero |
| } | | |

As shown in Table 1, the alternative zone indicator includes a single reserved bit. The single reserved bit having a value of '1' indicates the capability of zone switch (e.g., advanced operation mode according to IEEE 802.16m); while having a value of '0' indicates no support for zone switch. Other methods of detecting the capability of zone switch may also be used.

After identifying that BS 110 is capable of performing zone switch (402), MS 130 sends a zone switch request message, such as an MSZS-REQ (MS zone switch request) message to BS 110 (404). MS 130 sends the MSZS-REQ to BS 110 through the serving zone to ask for performing zone switch. The zone switch request contains identification of MS 130 to inform BS 110 who is asking for the zone switch.

After receiving the zone switch request from MS 130, BS 110 determines whether to accept or reject the zone switch request. If BS 110 determines to accept the zone switch request, BS 110 performs zone switch preparation (406). For example, BS 110 may check if the target zone is activated or not. If the target zone is not activated, BS 110 activates the target zone during zone switch preparation. BS 110 may also allocate resources in target zone to support the same quality of service (QOS) in the serving zone. Further, BS 110 may transfer or map the user profile and all parameters, messages, and resource for link control such as authentication, key management, registration information, timers, buffers, retransmission sequences, and other required entities from the serving zone to the target zone.

BS 110 also replies to MS 130 with a zone switch response (MSZS-RSP) message (408). The MSZS-RSP message may include information related to the zone switch, including target zone information, such as the synchronization parameters (e.g., synchronization channel index, timing offset for the target zone), new MS identification, a zone switch timer, and optional new security configuration/parameters.

On the other hand, if BS 110 rejects the zone switch request, BS 110 may ignore the request or send a MSZS-RSP message with reject indication to MS 130. If MS 130 does not receive the zone switch response within a period of time or receives the reject indication, MS 130 stops the zone switch procedure.

Assuming BS 110 accepts the zone switch request and indicates such acceptance in the MSZS-RSP message, MS 130 turns on operation mode for the target zone (410). MS 130 also performs a target zone entry procedure to establish an access link with the target zone (412). If target zone entry procedure is successfully completed before the zone switch timer expires, MS 130 sends a zone switch indication message, such as an MSZS-IND (MS zone switch indication) message to BS 110 through the serving zone to notify BS 110 that the target zone entry procedure is successful (414).

After receiving the MSZS-IND message, BS 110 releases serving zone resources for MS 130 and clears serving zone state machine parameters for MS 130 (416). BS 110 also confirms the success of target zone entry and the resource release in the serving zone. MS 130 turns off the operation mode for the serving zone (418).

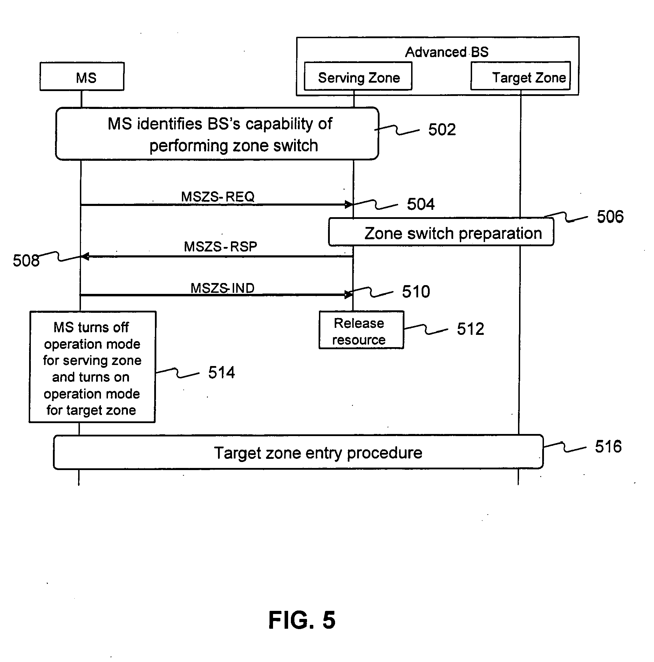

Fig. 5 illustrates another exemplary MS initiated zone switch process. As shown in Fig. 5, the zone switch may be initiated by MS 130 via a break-before-make zone switch procedure with BS 110. Operations 502, 504, 506, and 508 are the same as operations 402, 404, 406, and 408, illustrated in Fig. 4, respectively.

In 510, MS 130 sends a zone switch indication message, such as an MSZS-IND (MS zone switch indication) message to BS 110 before performing any target zone entry procedure. After receiving the MSZS-IND message, BS 110 releases serving zone resources for MS 130 (512), which is similar to 416 (Fig. 4). BS 110 receives the MSZS-IND message through the serving zone.

Further, MS 130 turns on the operation mode for the target zone and turn off the operation mode for the serving zone (514), similar to 410 and 418 (Fig. 4). Further, MS 130 performs a target zone entry procedure to establish an access link with the target zone (step 516), similar to 412 (Fig. 4).

For the above zone switch processes shown in Figs. 4 and 5, if MS 130 wants to cancel the zone switch procedure, MS 130 may use the zone switch indication message to send a cancellation request to BS 110 through the serving zone. After receiving the cancellation request, BS 110 stops the zone switch procedure and does not release the resources for MS 130 in the serving zone. Further, MS 130 may also determine whether to use the make-before-break method or the break-before-make method based upon certain conditions, such as the current status of the serving zone and target zone, the estimated success rate of the zone switch, and status and quality of current access link with BS 110, etc.

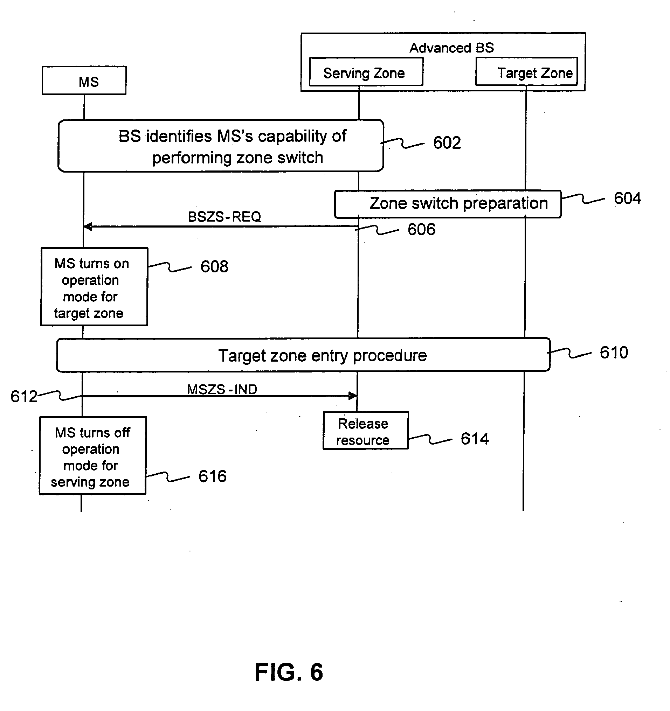

Fig. 6 illustrates an exemplary BS initiated zone switch process. As shown in Fig. 6, the zone switch may be initiated by BS 110 via a make-before-break zone switch procedure with MS 130. At the beginning, BS 110 identifies MS 130's capability of performing zone switch (602). MS 130 is capable of performing zone switch if MS 130 can support both a legacy operation mode and an advanced operation mode for communication with BS 110. There may be several ways for BS 110 to identify the capability of performing zone switch of MS 130.

For example, BS 110 may be able to detect an advanced MS indication message or an advanced MS indicator carried in other messages from MS 130. MS 130 may send the advanced MS indication message or an advanced MS indicator carried in other messages upon a request from BS 110 or voluntarily. The advanced MS indication message or an advanced MS indicator may indicate whether MS 130 is an advanced MS or a legacy MS.

The advanced MS indicator may be a flag, a bit, or several bits in certain types of messages. For example, the advanced MS indicator may be carried by the uplink control message such as a reserved bit in the ranging request (RNG-REQ) in IEEE 802.16 based systems, as shown in Table 2 below.

**Table 2. Advanced MS indicator by RNG-REG modification**

| **Syntax** | **Size (bit)** | **Notes** |
|---|---|---|
| RNG-REQ_Message_Format() { | | |
| Management Message Type = 4 | 8 | - |
| **Advanced MS Indicator** | 1 | **0: Legacy MS** |
| | | **1: Advanced MS** |
| *Reserved* | *7* | Shall be set to zero |
| TLV Encoded Information | *variable* | TLV-specific |
| } | | |

As shown in Table 2, the advanced MS indicator may include a single reserved bit. The single reserved bit having a value of '1' indicates capability of zone switch (e.g., advanced mode according to IEEE 802.16m); while having a value of '0' indicates no support for zone switch.

After identifying that MS 130 has the capability to perform the zone switch (602), BS 110 performs zone switch preparation (step 604). For example, BS 110 may check if the target zone is activated or not. If the target zone is not activated, BS 110 may activate the target zone during zone switch preparation. BS 110 may also allocate resources in target zone to support the same quality of service (QOS) in the serving zone. Further, BS 110 may transfer or map the user profile and all parameters, messages, and resources for link control such as authentication, key management, registration information, timers, buffers, retransmission sequences, and other required entities from the serving zone to the target zone.

Further, BS 110 sends MS 130 a zone switch request message (e.g. BSZS-REG) to initiate the zone switch procedure. The zone switch request message may contain target zone information, such as the synchronization parameters (e.g., synchronization channel index, timing offset for the target zone), new MS identification, a zone switch timer, and optional new security configuration/parameters. Other information may also be included in the zone switch request message.

The remaining operations 608, 610, 612, 614, and 616 are similar to operations 410, 412, 414, 416, and 418, illustrated in Fig. 4, respectively, to complete the zone switch procedure between MS 130 and BS 110 via a make-before-break procedure.

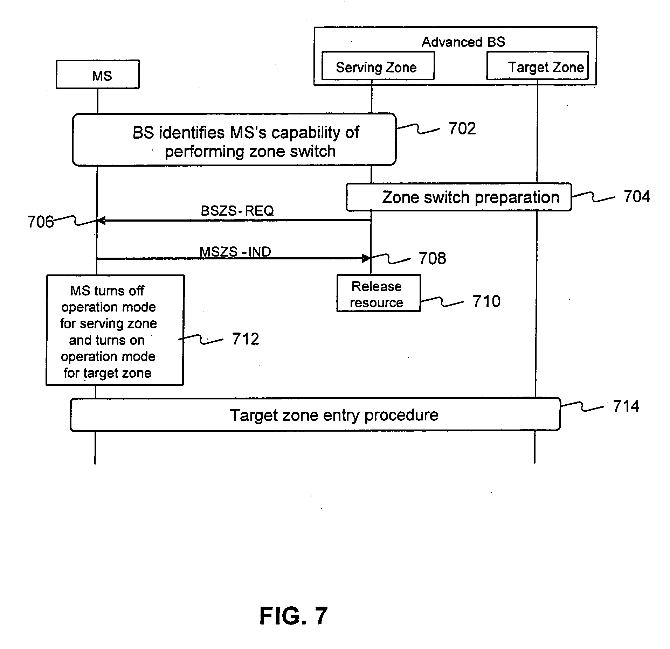

Fig. 7 illustrates another exemplary BS initiated zone switch process. As shown in Fig. 7, the zone switch may be initiated by BS 110 via a break-before-make zone switch procedure with MS 130. Operations 702, 704, and 706 are the same as operations 602, 604, and 606, illustrated in Fig. 6, respectively. Further, operations 708, 710, 712, and 714 are the same as or similar to operations 510, 512, 514, and 516, illustrated in Fig. 5, respectively, for completing the zone switch procedure between MS 130 and BS 110 via a break-before-make procedure.

Similar to the MS initiated zone switch procedure, during the BS initiated zone switch procedure shown in Figs. 6 and 7, if MS 130 wants to cancel the zone switch procedure, MS 130 may use the zone switch indication message to send a cancellation request to BS 110 through the serving zone. After receiving the cancellation request, BS 110 stops the zone switch procedure and keeps the resource for MS 130 in the legacy zone.

Returning to Fig. 1, MS 130 may move from cell 112 to cell 122 or move from cell 122 to cell 112, and handover procedures may be performed such that MS 130 maintains active communication sessions or links when switching between BSs respectively corresponding to the cells. The BS controlling the cell to which MS 130 switches may be referred to as a target BS, and the BS controlling the cell from which MS 130 switches may be referred to as a serving BS. The serving BS or the target BS can be either an advanced BS or a legacy BS. Thus, the handover procedures may include handover procedures from a serving legacy BS to a target advanced BS and from a serving advanced BS to a target legacy BS. The handover procedures between the same systems, i.e., from a serving legacy BS to a target legacy BS and from a serving advanced BS to a target advanced BS are within systems of the same standards and are not discussed herein in detail.

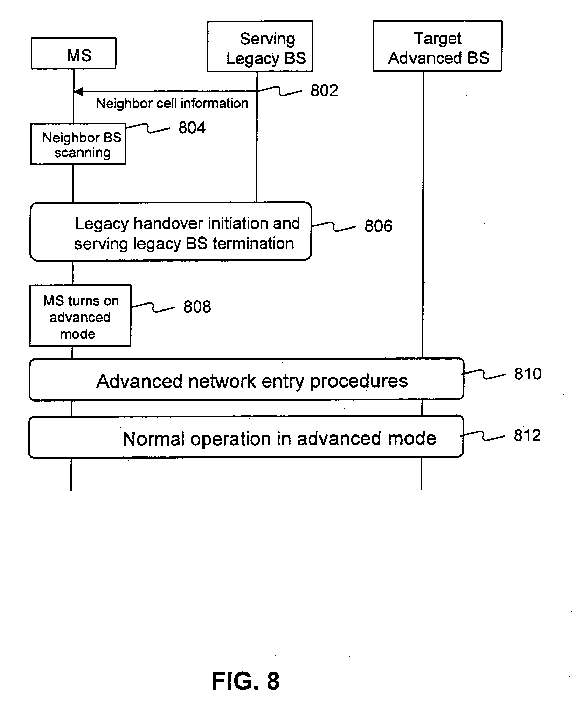

Further, the handover procedures may include a one-stage handover procedure and a two-stage handover procedure. A one-stage handover, as used herein, refers to a single switchover from the serving BS to the target BS; while a two-stage handover refers to more than a single switchover from the serving BS to the target BS. For example, a two-stage handover may include a switchover from the serving BS to the target BS and a zone switch from a serving zone to a target zone. Fig. 8 illustrates an exemplary one-stage handover procedure from a serving legacy BS (e.g., BS 120) to a target advanced BS (e.g., BS 110).

As shown in Fig. 8, MS 130 obtains neighbor cell information (802). MS 130 may obtain the neighbor cell information from the serving legacy BS (BS 120). For example, MS 130 may receive and analyze certain messages from the serving BS and/or from the target BS to obtain neighbor cell information. MS 130 analyzes the neighbor cell information based on a relationship between legacy synchronization information and advanced synchronization information. That is, the serving legacy BS (BS 120) includes a set of legacy synchronization information to indicate or imply to MS 130 that some neighbor BS may be advanced BSs.

For example, legacy BS 120 using IEEE 802.16e standards may add a legacy preamble index into neighbor cell advertisement messages (e.g., MOB_NBR-ADV) to imply the existence of neighbor advanced BSs using IEEE 802.16m standards. That is, MS 130 may scan and search neighboring legacy BSs based on the legacy synchronization information in the neighbor cell advertisement messages, and may scan and search neighboring advanced BSs based on information mapping from the legacy synchronization information in the neighbor cell advertisement messages.

The legacy neighbor cell advertisement messages may implicitly or explicitly contain the information about neighboring advanced BSs, such as the synchronization information and the capability information. Also, mapping relationships between legacy preambles (e.g., IEEE 802.16e) and advanced preambles (e.g., IEEE 802.16m) may be pre-defined. Thus, a legacy BS (e.g., IEEE 802.16e) may add an advanced (e.g., IEEE 802.16e) preamble index into the MOB_NBR-ADV messages to imply possible preambles of the neighboring advanced (e.g., IEEE 802.16m) BSs. MS 130, with a legacy serving BS (BS 120), may scan neighboring legacy BSs based on the legacy (e.g., IEEE 802.16e) preamble index recommended in the MOB_NBR-ADV messages, and may also scan neighboring advanced BSs based on the preambles related to the advanced (e.g., IEEE 802.16e) preamble index.

For example, information about neighbor BSs may be inserted into a legacy neighbor cell advertisement message (e.g. MOB_NBR-ADV). The format of inserted advanced BS information should be compatible with the legacy format, so the information may need to be re-defined. Further, an indicator may be added to specify that the neighbor information is from a legacy BS or an advanced BS. For example, the 'Preamble Index' field in an IEEE 802.16e MOB_NBR-ADV message is an 8-bit field, in which the most significant bit (MSB) is a reuse factor, and the remaining 7 bits represent 114 preamble indexes. Because there are at least 512 secondary synchronization channels (S-SCH), or called secondary advanced preamble according to IEEE 802.16m, the 'Preamble Index' field may be unable to represent all the S-SCHs in the IEEE 802.16e MOB_NBR-ADV message.

However, because the field 'Preamble Index' in the MOB_NBR-ADV message can represent 128 values (7 bits), and only 114 values are used, 14 values are unused. Further, if counting in the MSB, which is the reuse factor of 2, a total 28 values are unused. Thus, these 28 unused values may be used as a demarcation between IEEE 802.16e preamble/SCH indexes and IEEE 802.16m information. It may be assumed that the values 0 to 113 are assigned to represent the IEEE 802.16e preamble indexes in the IEEE 802.16e preamble index set. In other words, if the value of the 'Preamble Index' field is smaller than or equal to 113 (belongs to 16e preamble index set), all IEEE 802.16e and IEEE 802.16m systems recognize the value as a valid IEEE 802.16e preamble index. However, if the value of 'Preamble Index' field is greater than 113, an IEEE 802.16e system may skip this neighbor information because it cannot recognize it, while an IEEE 802.16m system may recognize the value as valid IEEE 802.16m neighbor information. Further, the IEEE 802.16m neighbor information may be encoded according to a legacy TLV (type, length, and value) principle with predefined parameters and entities.

After obtaining neighbor cell information (802), MS 130 may find candidate neighboring advanced base stations based on the neighbor cell information (804). Alternatively or additionally, MS 130 may also discover new target BSs by using autonomous base stations scanning. Further, MS 130 may determine a target advanced BS (e.g., BS 110) based on predetermined criteria, such as signal quality or communication quality, etc. Further, MS 130 or serving BS 120 may initiate legacy handover procedures with the serving legacy BS (806). After legacy handover procedures are finished, MS 130 or serving BS 120 may terminate the access link with the serving legacy BS (806).

Further, MS 130 may turn on an advance operation mode (808), and may perform advanced network entry procedures with the target advanced BS (810) and perform advance network entry procedures through the advanced zone of the target advanced BS. After completing the advanced network entry procedures (810), MS 130 and the target advanced BS (e.g., BS 110) can enter normal operation in advanced operation mode (812).

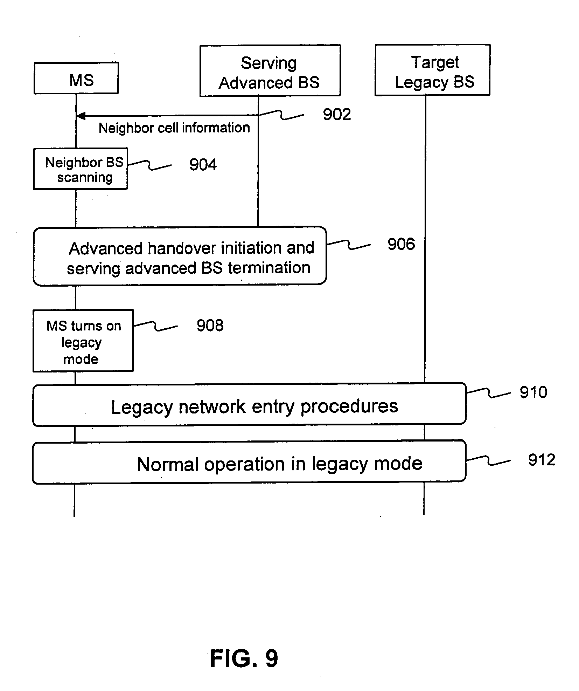

Fig. 9 illustrates an exemplary one-stage handover procedure from a serving advanced BS (BS 110) to a target legacy BS (BS 120). As shown in Fig. 9, MS 130 may obtain neighbor cell information (902). MS 130 may obtain the neighbor cell information from the serving advanced BS (BS 110). For example, MS 130 may receive and analyze certain messages from the serving BS and/or from the target BS to obtain neighbor cell information.

The serving advanced BS (BS 110) may be able to provide neighbor base station synchronization information for both legacy and advanced BSs. For example, BS 110 may broadcast the neighbor cell advertisement messages to include the synchronization information of the neighboring legacy (e.g., IEEE 802.16e) and advanced (e.g., IEEE 802.16m) BSs. Using this information, MS 130 may be able to perform neighbor BS scanning for both neighboring legacy BSs and advanced BSs.

After obtaining neighbor cell information (902), MS 130 may perform base station scanning based on the neighbor cell information to find candidate neighboring legacy base stations (904). Alternatively or additionally, MS 130 may also discover new target BSs by using autonomous base station scanning. Further, MS 130 may find candidate neighboring BSs and identify a target legacy BS (e.g., BS 120) based upon predetermined criteria, such as signal quality or communication quality, etc. MS 130 or serving BS 110 may also initiate advanced handover procedures (906). After the advanced handover procedures are completed, MS 130 or serving BS 110 may terminate the access link between MS 130 and the serving advanced BS 110 (906).

Further, MS 130 turns on legacy operation mode (908), and performs legacy network entry procedures with the target legacy BS (910). After completing the legacy network entry procedures (910), MS 130 and the target legacy BS (e.g., BS 120) enter the normal operation in legacy operation mode (912).

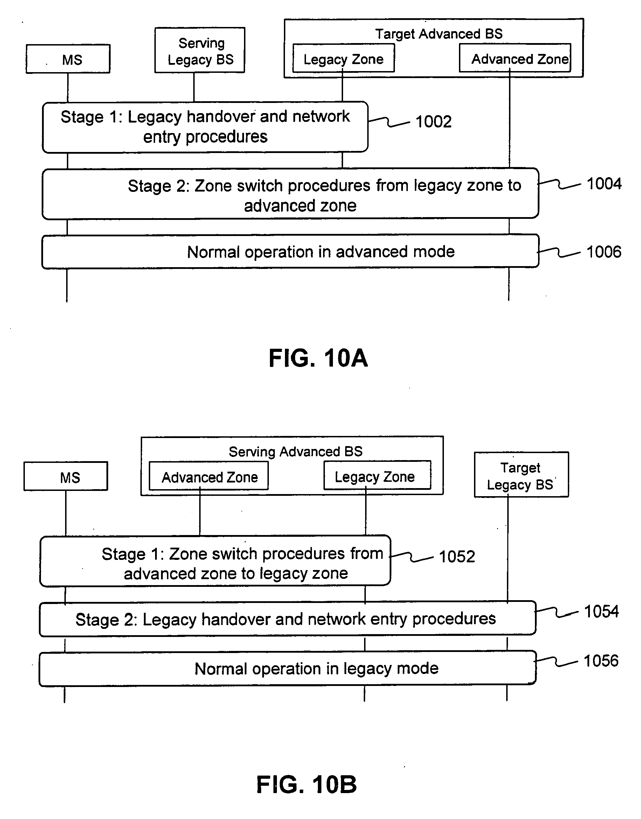

Fig. 10A illustrates a high-level exemplary two-stage handover procedure from a serving legacy BS to a target advanced BS. As shown in Fig. 10A, MS 130 performs a legacy handover and network entry procedures in stage 1 (1002). That is, MS 130, serving legacy BS 120, and target advanced BS 110 complete the legacy handover procedures, such as the neighbor BS scanning, the handover process, network entry procedures, etc., such that MS 130 is handed over from serving legacy BS 120 to a target advanced BS 110's legacy zone.

Further, MS 130 and advanced BS 110 perform the zone switch procedures to switch the access link between MS 130 and BS 110 from the legacy zone to the advanced zone in stage 2 (1004). The zone switch procedures may be initiated by MS 130 or target advanced BS 110, using the make-before-break or the break-before-make method, as described in previous sections. After the zone switch procedures, MS 130 and advanced BS 110 perform normal operation in the advanced operation mode (1006).

Fig. 10B illustrates a high-level exemplary two-stage handover procedure from a serving advanced BS (e.g., BS 110) to a target legacy BS (e.g., BS 120). As shown in Fig. 10B, MS 130 and serving advanced BS 110 perform the zone switch procedures in stage 1 to switch the access link between MS 130 and BS 110 from advanced zone to legacy zone (1052). The zone switch procedures may be initiated by MS 130 or by target advanced BS 110, using the make-before-break or the break-before-make method, as described in previous sections.

Further, MS 130 and target legacy BS 120 may complete legacy handover procedures (1054), such as the neighbor BS scanning, the handover process, network entry procedures, etc., in stage 2 such that MS 130 is handed over from serving advanced BS 110 to target legacy BS 120. After the handover procedures, MS 130 and legacy BS 120 perform normal operation in legacy operation mode (1056).

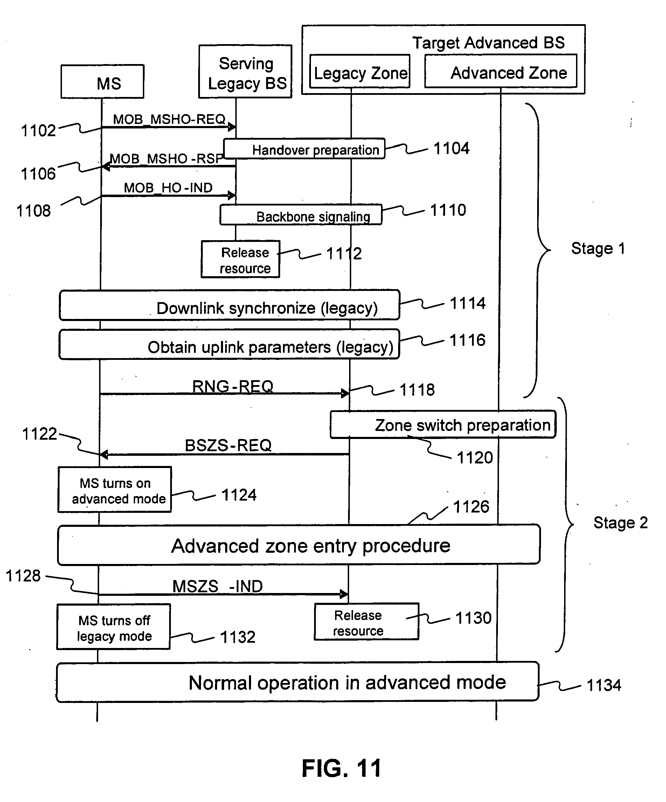

Although Fig. 10A and Fig. 10B illustrate that stage 1 and stage 2 are performed separately, the separation of stage 1 and stage 2 is used for illustrative purposes only. Stage 1 and stage 2 are not completely independent procedures, and procedures for stage 1 and stage 2 may be closely integrated for various advantages such as efficiency, speed, signaling, and/or practicality. Fig. 11 illustrates an exemplary two-stage handover procedure from a serving legacy BS to a target advanced BS.

As shown in Fig. 11, MS 130 sends serving legacy BS 120 a handover request via a handover request message (MOB_MSHO-REQ) (1102). After receiving the handover request, serving legacy BS 120 performs handover preparation (1104) and sends MS 130 a handover response via a handover response message (MOB_MSH-RSP) (1106). Further, MS 130 sends serving legacy BS 120 a handover indication via a handover indication message (MOB_HO-IND) (1108). After receiving the MOB_HO-IND message from MS 130, serving legacy BS 120 performs backbone signaling to notify target advanced BS 110 about the handover along with information about MS 130 (1110). Backbone signaling refers to a set of actions to signal elements of backend networks of a BS, such as a home location register (HLR), a visiting location register (VLR), and/or an authentication, authorization and accounting (AAA) server. Further, serving legacy BS 120 terminates the access link between MS 130 and serving legacy BS 120 and releases resources for MS 130 (1112).

MS 130 performs downlink synchronization with target advanced BS 110 (step 1114) and obtains uplink parameters from target advanced BS 110 (1116). MS 130 performs these actions in legacy operation mode with the legacy zone of BS 110 to perform the legacy network entry procedures to the legacy zone of target advanced BS 110. However, when performing a ranging request (RNG-REQ) during the legacy network entry procedures, MS 130 may insert an advanced MS indicator in the ranging request message to inform target advanced BS 110 that MS 130 is an advanced (e.g., IEEE 802.16m) MS.

After receiving the advanced MS indicator from MS 130, target advanced BS 110 starts to perform BS-initiated zone switch procedures from the legacy zone to the advanced zone via 1120, 1122, 1124, 1126, 1128, 1130, and 1132, which are the same as 604, 606, 608, 610, 612, 614, and 616, illustrated in Fig. 6, respectively, to complete the zone switch. After completing both the handover procedures and the zone switch procedure, MS 130 and target advanced BS 110 enter normal operation in the advanced operation mode (1134). In certain embodiments, after receiving the advanced MS indicator from MS 130, target advanced BS 110 may directly hand over MS 130 from the legacy zone of serving legacy BS 120 to the advanced zone of target advanced BS 110 before the handover procedure between the legacy zone of serving legacy BS 120 to the legacy zone of target advanced BS 110 is completed.

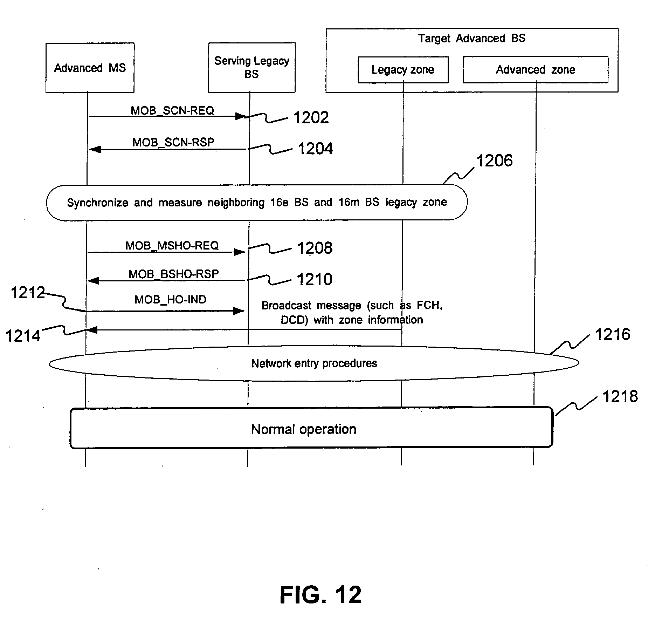

Fig. 12 illustrates an exemplary two-stage handover procedure from a serving legacy BS (e.g., BS 120) to a target advanced BS (e.g., BS 110). MS 130 sends a legacy neighbor base station scan request message (MOB_SCN-REQ) to serving legacy BS 120 (1202). Serving legacy BS 120 returns a legacy neighbor base station scan response message (MOB_SCN-RSP) to MS 130 (1204). The response message may include information about neighboring legacy BSs including the legacy zone of target advanced BS 110.

Based upon the information in the response message, MS 130 synchronizes and measures neighboring legacy BSs and the legacy zone of target advanced BS 110 (1206), and determines a handover to the legacy zone of target advanced BS 110. Further, MS 130 sends serving legacy BS 120 a handover request via a handover request message (MOB_MSHO-REQ) (1208). After receiving the handover request, serving legacy BS 120 performs handover preparation and sends MS 130 a handover response via a handover response message (MOB_BSHO-RSP) (1210). Further, MS 130 sends serving legacy BS 120 a handover indication via a handover indication message (MOB_HO-IND) (1212). Serving legacy BS 120 also terminates the access link between MS 130 and serving legacy BS 120 and releases resources for MS 130.

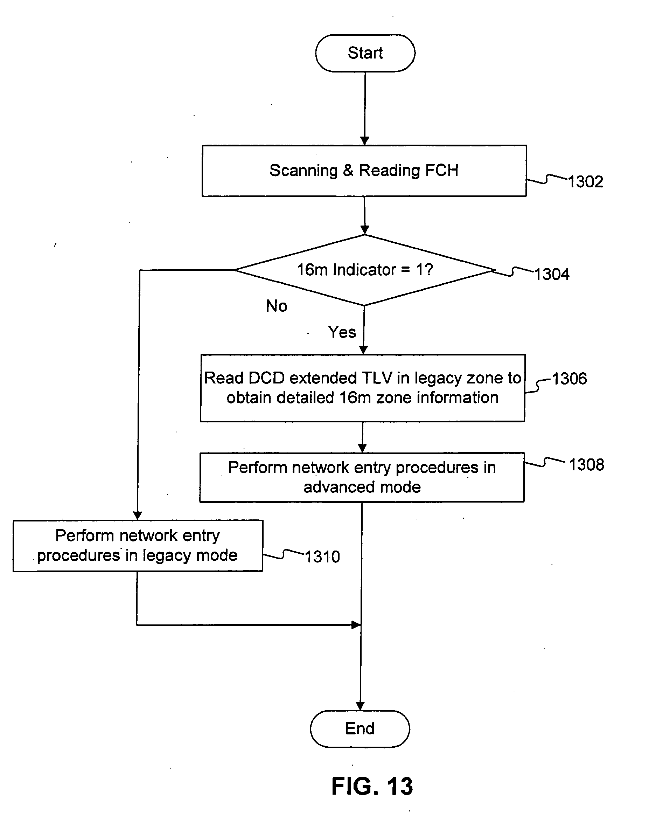

MS 130 may also obtain broadcast messages from the legacy zone of target advanced BS 110 (1212). The broadcast message may include information about capability of target advanced BS 110, such as FCH (frame control header) and DCD (downlink channel description (1214)). MS 130 may perform target network entry procedures based upon the information obtained from the legacy zone of target advanced BS 110 (1216). Fig. 13 illustrates an exemplary process performed by MS 130 for target network entry.

As shown in Fig. 13, MS 130 scans and reads FCH for an advanced base station capability indicator (1302). For example, MS may read an "IEEE 802.16m" indicator, such as the alternative zone indicator in Table 1, and determine whether the value of the indicator is true or '1' (step 1304). If MS 130 determines that the value of the indicator is '1' (1304; yes), MS 130 reads DCD extended TLV in the legacy zone message to obtain detailed advanced (e.g., IEEE 802.16m) zone information (1306). MS 130 then performs network entry procedures in advanced operation mode (1308). On the other hand, if MS 130 determines that the value of the indicator is not '1' (1304; no), MS 130 performs network entry procedures in legacy operation mode (1310).

Returning again to Fig. 12, after performing the network entry procedures (1216), MS 130 enters normal operation with BS 110 (1218). If MS 130 performed network entry procedures in legacy operation mode, MS 130 enters normal operation with BS 110 in legacy operation mode. Otherwise, MS 130 enters normal operation with BS 110 in advanced mode.

Other embodiments of the invention will be apparent to those skilled in the art from consideration of the specification and practice of the invention disclosed herein. It is intended that the specification and examples be considered as exemplary only, with a true scope and spirit of the invention being indicated by the following claims.

## Claims

1. A method of a base station for wireless communication, comprising:
providing a first zone and a second zone for wireless communication;
operating the first zone using a first operation mode;
operating the second zone using a second operation mode;
communicating with a mobile station in the first zone using the first operation mode;
determining whether the mobile station is capable of operating using both the first operation mode and the second operation mode; and
performing, if the mobile station is determined to be capable of operating using both the first and second operating modes, a zone switch procedure to switch the mobile station from the first zone using the first operation mode to the second zone using the second operation mode.

2. A method of a mobile station capable of communicating in a first operation mode and a second operation mode, comprising:
operating in the first operation mode for communicating with a first zone of a base station;
establishing a communication link with the base station using the first operation mode;
determining that the base station is capable of operating in both the first operation mode and the second operation mode;
performing a zone switch procedure to switch the mobile station from the first zone using the first operation mode to a second zone using the second operation mode; and
operating in the second operation mode for communicating with the second zone of the base station.

3. The method according to claim 1 or claim 2, wherein the mobile station determines that the base station is capable of operating in both the first operation mode and the second operation mode based on a zone indicator from the base station.

4. The method according to any one of the preceding claims, wherein performing the zone switch procedure includes one of:
performing the zone switch procedure using a make-before-break method; or
performing the zone switch procedure using a break-before-make method.

5. A method of a communication network for wireless communication, comprising:
providing a first base station capable of operating in a first operation mode;
providing a second base station capable of providing one or more zones and operating in at least a second operation mode;
providing at least one mobile station capable of operating in the first operation mode and the second operation mode;
communicating, by the mobile station, with one of the first base station and the second base station; and
performing a handover procedure to hand over the mobile station between the first base station and the second base station.

6. The method according to claim 5, wherein the one or more zones include a first zone operating in the first operation mode and a second zone operating in the second operation mode and performing the handover procedure includes:
obtaining, by the mobile station, information about the first zone of the second base station from the first base station;
performing the handover procedure from the first base station to the first zone of the second base station;
obtaining, by the mobile station, information about the second zone of the second base station from the first zone of the second base station; and
performing a zone switch from the first zone of the second base station to the second zone of the second base station.

7. The method according to claim 5 or 6, wherein performing the handover procedure includes:
obtaining, by the mobile station, information about a selected zone of the one or more zones of the second base station, the selected zone operating in the second operation mode, from the first base station; and
performing the handover procedure from the first base station to the zone of the second base station.

8. The method according to claim 5, 6 or 7, wherein the one or more zones include a first zone operating in the first operation mode and a second zone operating in the second operation mode and performing the handover procedure includes:
obtaining, by the mobile station, information about the first zone of the second base station from the first base station;
starting the handover procedure from the first base station to the first zone of the second base station;
receiving, by the mobile station, information about the second zone of the second base station from the first zone of the second base station before the handover procedure is completed; and
completing the handover procedure to hand over the mobile station from the first base station to the second zone of the second base station.

9. The method according to any one of claims 5 to 8, wherein performing the handover procedure includes:
obtaining, by the mobile station, information about the first base station from the second base station; and
performing the handover procedure from a selected zone of the one or more zones of the second base station to the first base station, the selected zone operating in the second operation mode.

10. The method according to any one of claims 5 to 9, wherein the one or more zones include a first zone operating in the first operation mode and a second zone operating in the second operation mode and wherein performing the handover procedure includes:
obtaining, by the mobile station, information about the first base station from the second base station;
performing the handover procedure from the second zone of the second base station to the first base station;
before performing the handover procedure, performing a zone switch from the second zone of the second base station to the first zone of the second base station.

11. A base station for wireless communication, comprising:
one or more antennas;
a transceiver coupled to the one or more antennas for receiving and transmitting communication data from and to mobile stations; and
a processor configured to:
provide a first zone and a second zone for wireless communication;
operate the first zone using a first operation mode;
operate the second zone using a second operation mode;
communicate with a mobile station in the first zone using the first operation mode;
determine whether the mobile station is capable of operating using both the first operation mode and the second operation mode; and
perform a zone switch procedure to switch the mobile station from the first zone using the first operation mode to the second zone using the second operation mode, if the mobile station is determined to be capable of operating using both the first operation mode and the second operation mode.

12. A mobile station capable of communicating in a first operation mode and a second operation mode, comprising:
one or more antennas;
a transceiver coupled to the one or more antennas for receiving and transmitting communication data from and to base stations; and
a processor configured to:
operate the first operation mode for communicating with a first zone of a base station;
establish a communication link with the base station using the first operation mode;
determine whether the base station is capable of operating using both the first operation mode and the second operation mode;
perform, if the base station is determined to be capable of operating in both the first and second operation modes, a zone switch procedure to switch the mobile station from the first zone using the first operation mode to a second zone using the second operation mode; and
operate the second operation mode for communicating with the second zone of the base station.

13. The method, base station or mobile station according to any one of the preceding claims, wherein
the first operation mode is one of a legacy operation mode and an advanced operation mode; and
the second operation mode is the other one of the legacy operation mode and the advanced operation mode.

14. The mobile station according to claim 12 or 13, wherein the processor is configured to determine whether the base station is capable of operating in both the first operation mode and the second operation mode based on a zone indicator from the base station.

15. The base station or mobile station according to any one of claims 11 to 14, wherein the processor is configured to perform the zone switch procedure using one of:
a make-before-break method; or
a break-before-make method.

16. A mobile station for wireless communication, comprising:
one or more antennas;
a transceiver coupled to the one or more antennas for receiving and transmitting communication data from and to base stations; and
a processor configured to:
provide a first operation mode for communicating with a first base station capable of operating in the first operation mode;
provide a second operation mode for communication with a second base station capable of operating in the first operation mode in a first zone and operating in the second operation mode in a second zone;
communicate with one of the first base station and the second base station; and
perform a handover procedure to handover between the first base station and the second base station.

17. The method, base station or mobile station according to any one of the preceding claims, wherein
the first operation mode is a legacy operation mode; and
the second operation mode is an advanced operation mode.

18. The mobile station according to claim 16 or claim 17, wherein, to perform the handover procedure, the processor is configured to carry out the method of any one of claims 12 to 15.

19. The mobile station according to claim 16, 17 or 18, wherein, to perform the handover procedure, the processor is further configured to:
perform a zone switch from the second zone of the second base station to the first zone of the second base station.
